# EUROPEAN PATENT APPLICATION

(11) **EP 2 492 067 A1**
(43) Date of publication of application: **29.08.2012**
(21) Application number: 11155783.1
(22) Date of filing: 24.02.2011
(51) Int. Cl.: B26D 1/08, B26F 1/18, E04B 1/76, F24J 2/51, F24J 2/24

(54) **Device for forming at least one line of weakness in a mineral wool blanket, corresponding method and product obtained by applying said method as well as specific use of such product**

(71) Applicant: URSA Insulation, S.A., 28004 Madrid (ES)
(72) Inventor: Ucok, Erkan, Eskisehir (TR); Ozdemir, Dural, Ankaya, Ankara (TR)
(74) Representative: HOFFMANN EITLE

(57) **Abstract**

A device for forming at least one line of weakness (12) with a longitudinally extending series of aligned slits (14) and bridging portions (20) between slits (14), in a mineral wool blanket (10), comprises a conveying means (22) for continuously transporting a mineral wool blanket (10) in a conveying direction (C) and a cutting means (24) arranged above the conveying means (22), the cutting means (24) being arranged and controlled (C) to perform a movement in the direction of thickness (T) of the mineral wool blanket (10). The cutting means (24) comprises an elongate cutting blade (26) which works in an guillotine-type manner extending perpendicularly to the conveying direction (C), the cutting blade consisting of a series of cutting portions (36) and recessed portions (38) between the cutting portions (36).

## Description

### Field of the Invention

The invention relates to a device for forming at least one line of weakness with a longitudinally extending series of aligned slits and bridging portions between the slits, in a mineral wool blanket as well as a method for providing a line of weakness in a mineral wool blanket using such a device. Further, the invention relates to a mineral wool product produced by such a method and a specific use of such mineral wool product.

### Background of the Invention

Mineral wool products are supplied either as individual panels or in the shape of long webs which are usually supplied in roll form. Such panels or rolls provide the basic material for different purposes in which specific portions are cut from the material to be used for specific insulation purposes. For many applications it is necessary to cut pieces of suitable dimensions from the raw material. To improve the handling and the working process, it is well-known in the art to provide marking lines on mineral wool products. Such marking lines have an optical effect only and do not mechanically weaken the mineral wool product. Such marking lines are cutting aids and all types of such marking lines including angularly oriented marking lines, equidistantly arranged transverse lines or longitudinally arranged lines and any combinations thereof are known in the art.

Besides marking lines which only act as an orientation for a user when cutting the product, it is also known in the art to provide cuts or perforations in mineral fiber products which act as a tearing aid.

The mass production of mineral fiber products includes the continuous production of fibers from a melt, e.g. a glass melt, formed from the raw material, which makes it advantageous also to perform the downstream processing steps in a continuous manner. Therefore, technical solutions are preferred which make it possible to provide cuts or perforations in mineral fiber products in a continuous way.

US 2003/0183055 Al describes a device and method for providing a longitudinally extending series of cuts and separable connectors in a fibrous insulation blanket. Such series of cuts and separable connectors is formed by a circular compression-cutting blade having an outer peripheral edge formed by a series of compression-cutting teeth separated by a series of notches. The fibrous insulation blanket is strongly compressed which leads to high compression stresses in the product. High compression stresses might lead to the breaking of some of the fibers in the product which reduces the elasticity of the product.

### Summary of the Invention

It is the object of the invention to provide a device and method for generating at least one line of weakness in a fibrous mineral wool blanket which can be carried out in-line and requires only a short processing time for generating such line of weakness and which maintains at the same time a high product quality of the mineral wool product. This object is solved by a device and method for providing at least one line of weakness in a mineral wool blanket with the features of claims 1 and 7. The corresponding product is characterized by the features of claim 10. Claim 18 and 19 give a specific use of such product.

The inventive device for forming at least one line of weakness, with a longitudinally extending series of aligned slits and bridging portions between the slits, in a mineral wool blanket comprises a conveying means for continuously transporting a mineral wool blanket in a conveying direction and a cutting means arranged above the conveying means. This means that the mineral wool blanket is deposited on the conveyer means so that the mineral wool moves in the conveying direction which is the main working direction. When the cuttings means is in a state of rest, i.e. not performing a cut to form the line of weakness, the knife edge of the cutting means are positioned above the main surface of the mineral wool blanket. The main surface is meant to be the upper surface which is formed by the mineral wool product in length and width direction. The cutting means is designed and controlled to perform a movement in the direction of thickness of the mineral wool blanket. The cutting means comprises an elongate cutting blade which works in a guillotine-type manner and which extends perpendicularly to the conveying direction and perpendicularly to the direction of the thickness of the mineral wool blanket, the cutting blade comprising a series of cutting portions and recessed portions between the cutting portions.

The device can be operated while continuously moving the mineral wool blanket by means of the conveying means. Since the cutting means comprises a cutting blade which acts in guillotine-type manner and which extends perpendicularly to the conveying direction, such cutting means can be controlled in a way to make a very quick cutting movement and subsequent moving upwards into a position above the mineral blanket again. Although the cutting blade extends perpendicularly to the conveying direction, such quick movement makes it possible to carry out the forming of a line of weakness at regular conveying speed of the conveying means. A further advantage of a elongate cutting blade which acts in a guillotine-type manner is its high variability with regard to specific geometries. This makes it possible to design the line of weakness according to specific needs. It is easily possible to exchange the cutting blade by a different one so that the length and the amount of the individual slits and the length and the amount of the bridging portions between the slits can be varied according to specific needs like the stability of the mineral wool blanket and the desired force required by an operator to tear the mineral blanket along a line of weakness. A further advantage of the cutting blade which acts in a guillotine-type manner is the possibility to provide any desired depths of penetration into the product, whereby a complete penetration of the product provides the best results. A stop means can be provided independent of the cutting blade and might be adjusted depending on the specific product which is produced in an existing production line. Finally, the cutting blade which acts in guillotine-type manner performing a very quick cutting and retraction movement makes use of the inertia of the individual fibers. The fibers are not bent but immediately broken at the desired position. A previous bending of the fibers or a slow cutting movement implies the danger that the fibers might break at different positions which can reduce the desired elasticity of a mineral wool product. To this end, the elongate cutting blade which works in guillotine-type manner should be preferably provided with a force load ranging between 2.940 [N] to 3.530 [N] when penetrating and cutting the mineral wool blanket to form the slits. An improved quality with respect of achieving a neat separating cut and having no negative impact on the product elasticity can be obtained by selecting the force load to be applied to the cutting blade from a range between 3.140 [N] to 3.430 [N]. The optimum value is 3.330 [N] and it has to be adapted to the fall velocity of the cutting blade and the conveyer speed, as outlined below.

The method for producing at least one line of weakness in a mineral wool blanket using an inventive device comprises the method steps of
- conveying a mineral wool blanket to the cutting means;
- lowering the guillotine-type cutting blade from a starting position to a final cutting position while continuing to convey the mineral wool blanket, wherein in the cutting position
- the cutting blade penetrates the mineral wool blanket to the final cutting position such as to form a line of weakness with a series of slits preferably extending all through the thickness of the mineral blanket, and with unweakened bridging sections between adjacent slits; and
- lifting the cutting blade from the final cutting position into the starting position.

The final cutting position is the bottom reversal point, where the cutting edge of the cutting blades finishes the cutting operation, comes to an standstill and starts to move in the opposite direction to lift the cutting blade into the starting position.

As outlined above, the slits preferably extend all through the thickness of the mineral wool blanket. This improves the visibility of the line of weakness on both sides of the product and, at the same time, also improves the optical appearance of the edges of the product when it has been torn along the line of weakness.

The inventive method leads to a mineral wool product, preferably packaged and supplied in roll form, comprising a length direction, which coincides with the direction of movement of the conveying means, a width direction perpendicularly to the length direction and which forms together with the length direction the main insulating area of the mineral wool blanket, and a thickness perpendicularly to the length direction and width direction. The mineral wool product comprises at least one line of weakness acting as a tearing aid, the at least one line of weakness being in the width direction of the mineral wool product and consisting of aligned slits preferentially extending over the total thickness of the mineral wool product, and separate bridging portions between two adjacent slits, respectively. If a slit does not start at the longitudinal edge of the mineral wool product, such an edge portion is also a bridging portion although it is not situated between two adjacent slits. Therefore, the term "bridging portions" should be understood as all remaining parts on the line of weakness except the slits, i.e. the "bridging portions" form that part of the line of weakness which is not cut.

Preferred embodiments follow from the dependent claims.

According to a preferred embodiment of the invention, the cutting portions of the cutting blade have a saw-tooth profile. Such saw-tooth profile has been found to generate the best cutting results. When the guillotine-type elongate cutting knife rapidly moves into the mineral wool blanket, the angularly oriented cutting edges of the saw teeth cut the individual fibers with very little compression of the product. Such low compression prevents the danger that fibers break at a position remote from the desired position of the slit. Therefore, the mineral wool blanket is only mechanically weakened at those positions where it is intended.

Preferably, the cutting blade is longer than the width part of the conveying means intended for carrying the mineral wool blanket. This means that mineral wool blankets having a different width can be processed in the inventive device without changing the cutting blade. In this way, the shifting between different products can be easily made because it is not necessary to change the cutting means.

According to a preferred embodiment, the cutting blade is positioned in laterally arranged guiding means. Such measure serves to ensure an accurate and well-positioned cutting of the mineral wool blanket.

According to a preferred embodiment, the device further comprises a second cutting means arranged above the conveying means and downstream to the first cutting means which form the tearing line and the second cutting means being shaped to completely cut the mineral wool blanket in the width direction into individual pieces. Such second cutting means can be used to cut the endlessly produced mineral wool blanket into individual portions which are either packaged as panels or wound into rolls.

According to a preferred embodiment, the device comprises a controller operatively connected to the cutting means and the second cutting means. Such controller can be used to define the overall length of the piece cut from the endless mineral wool blanket, to define the distance between a plurality of lines of weakness and also to control the movement of the first cutting means and the second cutting means depending on the conveying speed of the conveying means.

According to a preferred embodiment of the inventive method, the steps of lowering the elongate cutting blade which acts in a guillotine-type and which forms the line of weakness, the penetrating of the cutting blade of the mineral wool blanket and the lifting of the cutting blade into the starting position can be carried out simultaneously with the step of conveying a mineral wool blanket to the cutting means. In other words, the cutting operation can be carried out in-line without the need for an intermediate buffering step or even stopping the conveying means during the cutting operation.

Preferably, this first cutting blade is operated a predetermined number of times, before the second cutting means is operated to separate the mineral wool blanket into a predetermined length which is subdivided by a plurality of lines of weakness into sections of identical geometry. In other words, the second cutting means could be operated such that the resulting predetermined length of the mineral wool blanket is made up of e.g. 10 consecutive sections which are subdivided by individual and parallel lines of weakness. In the example of a product having 10 sections, the two cutting means would be operated such that the cutting means generating a line of weakness is operated 9-times before, instead of a 10^{th} operation, the second cutting means is operated to fully cut the mineral wool blanket. The manufacturing process should be adapted so that it can be run with an amount of cuts per minute of the first cutting blade ranging from 10 [cuts/min] to 25 [cuts/min] and preferentially between 12 [cuts/min] to 20 [cuts/min]. It turned out that a value of 13 [cuts/minute] is the optimum and leads to a good quality of the slits to be produced, when combined with a force load to be applied to the first cutting blade of 3.330 [N].

The inventive mineral wool product is preferably formed such that the bridging sections have the same nominal thickness as the mineral wool product. The nominal thickness is the average overall thickness of the product as produced. Such thickness is subject to some minor fluctuations based on the production method starting with a fiberizer which forms the fibers and sucking means which direct the flow of fibers in the direction of the conveyer means deposits the fibers produced in an irregular manner on a conveying means in order to form a so-called mineral wool fleece. The fleece consists of a network of fibers being irregularly arranged and a binder which is sprayed on the fibers immediately after fiberization. The fleece is conveyed downstream in a curing oven which makes the binder solidify, connect individual fibers at connecting points with each other and hence forming the mineral wool product. Depending on density of the mineral wool product and the binder content, either mineral wool blankets or mineral wool panels are formed. In a preferred embodiment, the mineral wool is glass wool.

The feature according to which the bridging sections have the same nominal thickness as the mineral wool product means that, in the bridging sections, there is no mechanical weakening of the product. Therefore, the mechanical weakening is only provided by the slits.

Preferably, the mineral wool product further comprises visual marking lines in the bridging sections. Such visual marking lines do not weaken the product but only act as a visual aid for a user in order to identify the tearing line. Such visual marking lines could be produced in parallel to the cutting operation by providing heating elements on the cutting blade in the recessed portions between the cutting portions of the cutting blade. Instead of applying heating marks, those additional visual marking lines could be also realized on the mineral wool product by spraying or stamping indicators - like signs, lines or dotted lines - with paint providing means.

Preferably, the ratio between the length of the slits and the length of the bridging portions ranges from 1,33x to 4,00. Such ratio has been found to provide good stability to the overall product but still enables an easy separation of the product into individual pieces.

Preferably the length of the slits range from 80 to 160 mm, and the length of the bridging portions ranges from 40 to 60 mm. Preferably the width of the mineral wool blanket ranges between 900 and 1.200 mm, having between 7 and 14 slits.

Preferably, the product comprises a plurality of lines of weakness, preferably more than 5 lines of weakness, which are parallel to each other and equidistantly arranged.

The inventive use of product produced by means of the inventive method for separating pre-dimensioned pieces of a mineral wool blanket to be used in solar collectors has the specific advantage that no further steps are required to fit the individual pre-dimensioned pieces to fit into a reception space in a solar collector. Solar collectors are products with essentially rectangular main surfaces and constant thickness. As a result of this, a cuboid piece of mineral wool, especially glass wool, can be easily inserted into the inner reception space of a solar collector without the need of a specific and complex shape of a mineral wool product. This means that the pre-conditioned mineral wool products can be easily used in the process of producing solar collectors. The individual and pre-dimensioned pieces simply have to be separated from the mineral wool product, e.g. from a roll with a plurality of individual pieces separated from each other by a line of weakness. No further adaptions are necessary. In most other applications for mineral wool products, a special adjustment of the size of the insulation product is necessary. This is not the case with solar collectors. Therefore, the inventive device and method leads to a product which has special advantages when used for the production of solar collectors.

### Brief Description of the Drawings

In the following, an inventive product, part of the inventive device and the specific use of the product are shown in the accompanying drawings in which:
- Fig. 1: shows a schematical view of a mineral wool blanket with three lines of weakness therein;
- Fig. 2: schematically shows the key components of the device for forming at least one line of weakness in a mineral wool blanket;
- Fig. 3: is an enlarged view of the cutting blade as shown in Fig. 2; and
- Fig. 4: is a perspective view of a solar collector including a mineral wool product as separated from the mineral wool blanket.

### Description of Preferred Embodiments

In the following, the key aspects of the invention will be described in more detail. Throughout the different drawings, the same reference numerals will be used to identify the same or similar elements.

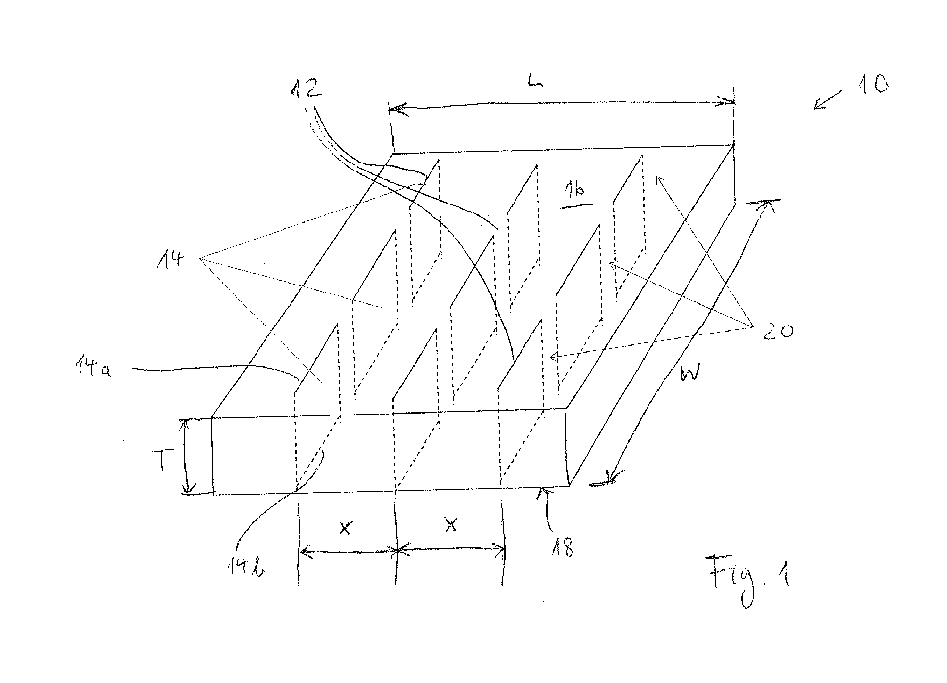

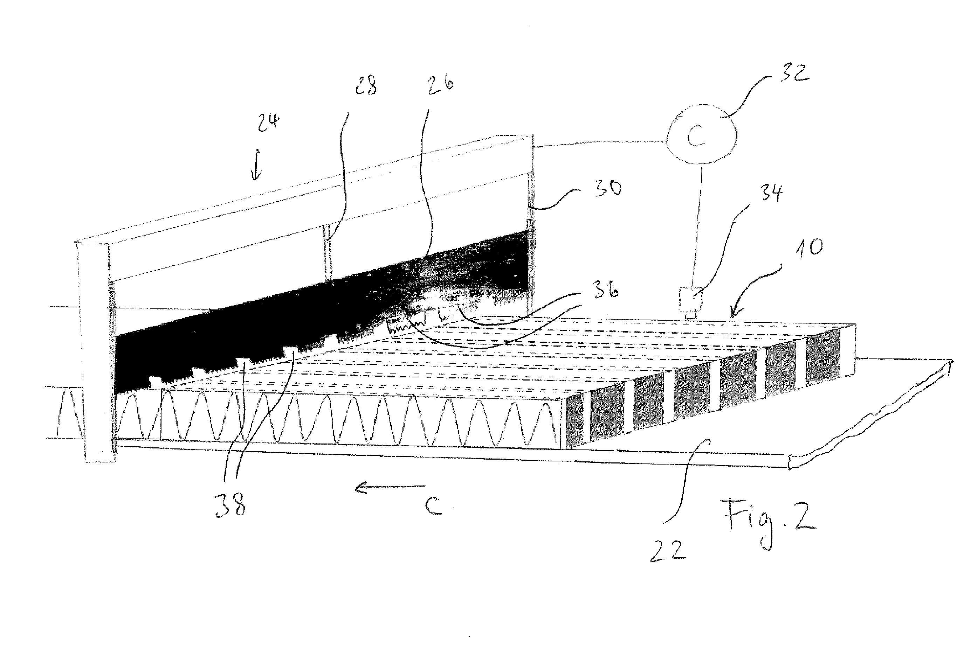

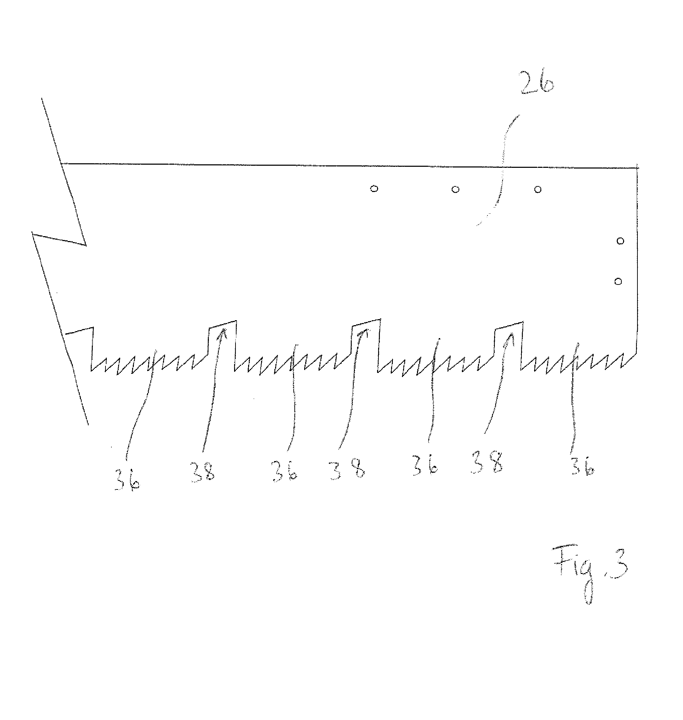

The mineral wool blanket as shown in Fig. 1 is generally denoted by reference numeral 10. It is preferably made of glass fibers and the basic glass fiber blanket is produced in a conventional way by fiberizing a glass melt, depositing the glass fibers on a conveying means, adding a heat curable substance, i.e. a binder, hardening the product by conveying it through a curing oven and a subsequent continuous downstream processing, which also includes the device as described with reference to Figs. 2 and 3.

The mineral wool blanket 10 has a width W, a thickness T and a length L. In the production process the length L corresponds to the conveying direction of the product.

In the product, there are three weakening lines 12, all of which are formed by a sequence of slits 14 which are aligned along each line of weakness 12. The slits extend over the whole thickness T of the mineral wool blanket 10. The slits are formed by cutting the fibers in the whole region as schematically shown in Fig. 1. This means that each slit is made up of an upper opening 14a in the upper main surface 16 of the mineral wool blanket and a lower opening 14b in the opposite lower main surface 18 of the mineral wool blanket 10. As regards the relative position of the upper openings 14a and lower openings 14b, the positions correspond to each other such that the slots as such have a rectangular cross-sectional shape.

Between the individual slots 14, there are bridging
portions 20, in which the fiber material of the mineral wool blanket has not been cut and remains mechanically unweakened. In other words, the material is only cut where the slots are positioned along the lines of weakness.

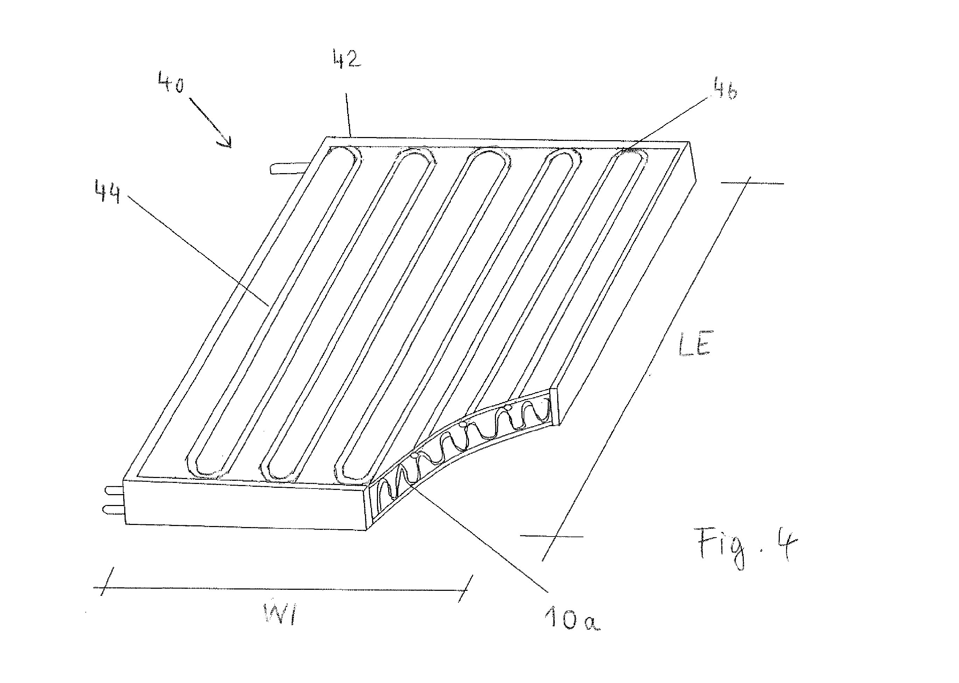

In the example as shown in Fig. 1, the individual lines of weakness 12 are equidistantly arranged with a distance X between subsequent lines of weakness. However, it should be noted that the distances X could be adjusted to specific needs. The same applies to the number of slots and bridging sections as well as to the overall number of lines of weakness in a product. With reference to Fig. 4, a specific and preferred use of a product will be described. However, it is also possible that, by providing lines of weakness with varying, predefined distances, a user can tear of sets of individual pieces of mineral wool which could be used for specific purposes in which a plurality of individual pieces of different dimensions are required in the course of a production process.

The mineral wool blanket 10 as shown in Fig. 1 has an essentially constant thickness T which is the nominal thickness of the product. The fact that the material is not weakened in the bridging portions 20 means that the thickness of the mineral wool blanket 10 in the bridging portions also corresponds to this nominal thickness T.

Fig. 2 shows a part of the device for generating the lines of weakness in the mineral wool blanket 10. The mineral wool blanket 10 is placed on a conveying means 22 which can be realized in a conventional way, e.g. by means of a conveying belt. The conveying belt continuously travels in the conveying direction C which corresponds to the length L of the product as shown in Fig. 1. Fig. 2 shows a cutting means 24 with a guillotine-type elongate cutting blade 26. The cutting blade 26 can be moved from a starting position as shown in Fig. 2 and positioned above the conveying means 22 and the product 10 to be treated to a final cutting position (not shown) in which the cutting blade 26 penetrates the product 10. In order to operate the cutting blade, a suitable actuator 28 has to be provided. This actuator can be used to move the cutting blade from the starting position to the final cutting position and vice versa. However, it is also possible to carry out the cutting operation without the use of an actuator. In this case, the cutting blade falls down during the cutting step and an actuator is only used to lift up the cutting blade after the cutting step. In order to make sure that the movement of the cutting blade is performed in a controlled and well-positioned way, it is possible to provide suitable means for guiding the cutting blade, like laterally arranged guide rails 30 as exemplified in Fig. 2. However, any other suitable guiding means as is known in the art can also be used.

The movement of the cutting means 24 is controlled by means of a control device 32, which might be operated based on data stored therein and controls the movement of the actuator 28 to operate the cutting blade 26. However, it is also possible to use additional input from a sensor, like a line camera system 34, or a sensor which inputs the travelling speed of the conveying means 22 into the controller 32.

The movement of the cutting blade 26 can be fully controlled by a suitable actuator 24. However, it is also possible to use additional means like an adjustable stopping means in order to adjust the desired starting position and the desired cutting position of the cutting blade.

The cutting blade 26 which has an elongate shape as shown in Fig. 2 consists of a series of cutting portions 36 and recessed portions 38 between two adjacent cutting portions 36. This geometry of the elongate cutting blade can be better seen from Fig. 3 showing a part of the cutting blade 26 which continues on both sides of Fig. 3 to the predetermined length of the cutting blade. Preferentially the cutting blade is between 1.200 and 1.800 mm long, whereas a length 1.600 mm allows to comply with the width of conventionally produced glass wool blankets.

In the section of the overall cutting blade as shown in Fig. 3, 4 cutting portions are shown with 3 recessed portions inbetween. The recessed portions 38 are dimensioned such that the cutting portions 36 can fully penetrate the product 10 to be cut in order to provide the slits 14 as shown in Fig. 1, whereas the recessed portions 38 do not enter into the product so that the bridging portions 20 as shown in Fig. 1 remain between the individual slits. Preferentially a cutting blade of 1.600 mm length has between 7 and 14 cutting portions 36.

As can be seen in Fig. 3, a saw-tooth profile is used for the individual cutting teeth of the cutting portions 36. Such geometry is advantageous in order to cut the fibers without compressing or crushing them to a considerable extent. This produces well defined cuts and does not damage the product outside the slits formed by the cutting portions.

The movement of the cutting blade 26 up and down has to be quick enough so as not to impede the conveying movement of the product in conveying direction C. As an advantage of the inventive process, the cutting action can be performed without the conveyer to come to a standstill. It has turned out, that the fall velocity of the cutting blade 26 should be set between 0,80 [m/s] to 1,20 [m/s]. In order to avoid any impediment with the conveying movement a preferred range of the fall velocity of the cutting blade 26 should be selected between 0,90 [m/s] and 1,10 [m/s. At the same time the conveyer speed should be set between 0,32 and 0,82 [m/s] and preferentially the conveyer speed should be selected between 0, 40 and 0,68 [m/s].

The optimum fall velocity of the blade is 1,00 [m/s] which correlates with an optimum conveyer speed of 0,40 [m/s].

Fig. 4 shows the specific example of a solar collector generally denoted by reference numeral 40. The solar collector 40 consists of an aluminum box 42 covered by a prismatic glass 42 and copper panel tubes 46 below the upper surface of the prismatic glass. Such standardized solar collectors have a defined length LE and width WI the dimensions of which are commonly somewhat between land 2 [m]. One specific but only exemplary example of the inner solar collector dimensions of LE and WI are LE = 1.950mm and WI = 930 mm. As an advantage, the width of the glass wool blanket (W) coincides with one dimension (WI) of the space to be filled in the solar collector, which is the width of 930mm. I.e. once the blanket has been separated according to the dividing lines, there is not any additional cutting necessary to fit the piece of glass wool blanket into the solar collector, as the inner length of the solar collector is 1.950mm. In order to fill the hollow space of this solar collector two pieces of 930 x 975 mm² are necessary. The dimension of 975 mm corresponds to the distance between two lines of weakness applied to the glass wool blanket.

Within the aluminum box 42, there is at least piece 10a of the mineral wool blanket 10, especially glasswool blanket, which has been separated along a line of weakness from the product. In this context it should be noted that the cutting means 24 as shown in Fig. 2 only provides the lines of weakness in a continuously produced web of mineral wool, especially glasswool, whereas a second cutting means of a conventional type can be used to fully cut the product into a predetermined length so as to obtain individual panels or webs which can be packaged in a conventional way as a stack of panels, or a package consisting of one or more individual rolls of the mineral wool product. Such product is provided with a plurality of lines of weakness which, in the specific example case as shown in Fig. 1, has a plurality of lines of weakness. In the example case of Fig. 4, the width of the product corresponds to one of the two given dimensions LE or WI, whereas the distance X between subsequent lines of weakness correspond to the other basic dimension. Therefore, when producing solar collectors 40, the product can be easily torn into individual pieces 10a which, due to the constant thickness of the space within the aluminum box, only has to be fitted into the aluminum box without a further need for any adjusting the dimensions of the piece 10a. The piece of mineral wool 10a is inserted in the aluminium box 42 in a way, that the tubes 46 are arranged between the prismatic glass 42 and the mineral wool piece 10a. The solar collector 40 can be placed on a roof so that the solar radiation passes through the transparent cover 46. A part of this solar radiation falls directly onto the metal tube 46 and heats the tube 46. A fluid flows through the metal tube 46 and is thereby heated. The piece of mineral wool blanket 10a reduces the loss of heat of the metal tube 46 by insulating the "cold side" of the solar collector 40. The prismatic glass 42 could be replaced by any transparent cover 42 as long as the solar radiation can pass through it and fall on the metal tubes 42. In such a way, a mineral wool product can be provided which can be easily processed because the lines of weakness allow it to be separated into individual pieces 10a or predetermined dimensions.

## Claims

1. Device for forming at least one line of weakness (12) with a longitudinally extending series of aligned slits (14) and bridging portions (20) between slits (14), in a mineral wool blanket (10), comprising:
- a conveying means (22) for continuously transporting a mineral wool blanket (10) in a conveying direction (C); and
- a cutting means (24) arranged above the conveying means (22), the cutting means (24) being arranged and controlled (C) to perform a movement in the direction of thickness (T) of the mineral wool blanket (10);
- the cutting means (24) comprising a an elongate cutting blade (26) which acts in guillotine-type manner and which extends perpendicularly to the conveying direction (C), the cutting blade consisting of a series of cutting portions (36) and recessed portions (38) between the cutting portions (36).

2. Device according to claim 1,
**characterized in that**
the cutting portions (36) have a saw-tooth profile.

3. Device according to claim 1 or claim 2, wherein the cutting blade (26) is longer than the width part of the conveying means (22) intended for carrying the mineral wool blanket (10).

4. Device according to any of the preceding claims, **characterized in that**
the cutting blade (26) is positioned in laterally arranged guiding means (30).

5. Device according to any of the preceding claims, further comprising a second cutting means arranged above the conveying means (22) and being shaped to completely cut the mineral wool blanket (10) into individual pieces.

6. Device according to claim 5, further comprising a controller (C), operatively connected to the cutting means (24) and the second cutting means.

7. Method for providing at least one line of weakness (12) in a mineral wool blanket (10) using a device according to any of the preceding claims, the method comprising the steps:
(a) conveying a mineral wool blanket (10) to the cutting means (24);
(b) lowering a cutting blade (26) which works in a guillotine-type manner from a starting position to a final cutting position, while continuing to convey the mineral wool blanket (10), wherein, in the cutting position,
(c) the cutting blade (26) penetrates the mineral wool blanket (10) in the direction of its thickness to the final cutting position such as to form a line of weakness (12) with a series of slits (14) extending all through the thickness (T) of the mineral wool blanket (10), and with unweakened bridging sections (20) between adjacent slits (14); and
(d) lifting the cutting blade (26) from the final cutting position into the starting position.

8. Method according to claim 7, wherein the steps (b) to (d) are carried out simultaneously with step (a).

9. Method according to claim 7 or 8, wherein the cutting blade (26) is operated a predetermined number of times, before a second cutting means is operated to separate the mineral wool blanket into a predetermined length, which is subdivided by a plurality of lines of weakness into sections of identical geometry.

10. Method according to any of the claims 7 to 9, wherein the velocity of the cutting blade (26) which acts in guillotine-type manner between the starting position and the final cutting position ranges between 0,80 m/s to 1,20 m/s and which has preferentially a value of 1,00 [m/s].

11. Method according to any of the claims 7 to 10, wherein the cutting blade (26) executes between 10 and 25 cuts per minute and preferentially 13 cuts per minute.

12. Method according to any of the claims 7 to 11, wherein a force ranging between 2.940 N to 3.530 N is applied to the cutting blade (26) when penetrating the mineral wool blanket and preferentially a force of about 3330 N is applied.

13. Method according to any of the claims 7 to 12, wherein the conveyer moves the mineral wool blanket with a conveyer speed ranging from 0,32 and 0,82 m/s and preferentially 0,40 m/s.

14. Mineral wool product (10a), preferably supplied in roll form, produced by a method according to any of the claims 7 to 13, comprising:
- a length direction (L), a width direction (W) perpendicularly to the length direction, and a thickness (T) perpendicularly to the length direction (L) and the width direction (W);
- at least one line of weakness (12) acting as a tearing aid;
- the at least one line of weakness (12) being in the width direction (W) of the mineral wool product (10) and consisting of aligned slits (14) extending over the total thickness (T) of the mineral wool product (10), and separable bridging portions (20) between two adjacent slits (14), respectively.

15. Mineral wool product (10a) according to claim 14,
wherein the bridging sections (20) have the same nominal thickness (T) as the mineral wool product (10).

16. Mineral wool product (10a) according to claim 14 or claim 15, further comprising visual marking lines in the bridging sections (20).

17. Mineral wool product (10a) according to any of the claims 14 to 16, wherein the ratio between the length of the slits (14) and the length of the bridging portions (20) ranges from 1,33x to 4.

18. Mineral wool product (10a) according to any of the claims 14 to 17,
**characterized in that**
the product comprises a plurality of lines of weakness (12), preferably more than 5 lines of weakness (12), which are parallel to each other and equidistantly arranged.

19. Use of a product (10a) produced by means of a method according to any of the claims 7 to 13 for separating pre-dimensioned pieces to be used in solar collectors (40).

20. Use of a product (10a) produced according claim 19 whereas the solar collector (40) comprises a mineral wool piece (10a), a metal tube 46 and a prismatic glass 42 **characterized in that** the metal tubes 46 are arranged between the prismatic glass 42 and the mineral wool piece 10a.

21. Use of a product (10a) produced according any of claim 19 or 20, wherein at least one external dimension (W) of the product (10a) coincides with at least one inner dimension (WI) of the hollow space formed by the solar collector (40).
